# EUROPEAN PATENT APPLICATION

(11) **EP 4 782 427 A1**
(43) Date of publication of application: **29.07.2026**
(21) Application number: 26154104.9
(22) Date of filing: 26.01.2026
(51) Int. Cl.: C04B 41/45, C04B 41/00, C04B 41/52, C04B 41/53, C04B 41/87, C04B 41/89, C04B 41/91, F01D 5/00

(54) **DEPOSITION OF MATERIAL ONTO CERAMIC MATRIX COMPOSITES**

(30) Priority: 24.01.2025 US 202519036644
(71) Applicant: RTX Corporation, Farmington, CT 06032 (US)
(72) Inventor: SUDRE, Olivier H., Glastonbury, 06073 (US)
(74) Representative: Dehns

(57) **Abstract**

A process for restoring a ceramic containing material comprising the steps of cleaning at least a portion of a location (30) on a surface of a ceramic containing material to form a cleaned location (50), the ceramic containing material comprising at least one of the following: a coated preform, a partially densified ceramic matrix composite, a ceramic matrix composite component, and combinations thereof; masking the surface, except for the cleaned location, of the ceramic matrix composite with a maskant (60) to form an aperture (70) exposing the cleaned location; shaping the aperture to form a shaped, exposed cleaned location; depositing a material onto the shaped exposed location to form a location having a deposited material (80); densifying the deposited material to form a densified location; and, reshaping the densified location to form a reshaped densified location.

## Description

### FIELD OF THE INVENTION

The subject matter disclosed herein relates to ceramic matrix composites and, in particular, to depositing material onto ceramic matrix composites.

### BACKGROUND OF THE INVENTION

Various components of a gas turbine engine may be made of ceramic matrix composites. One method of making ceramic matrix composite articles includes chemical vapor infiltration. However, when a ceramic matrix composite is discovered to exhibit a defect or nonconformance after the chemical vapor infiltration process, repairing the gas turbine engine component becomes difficult because most machining and repair processes are unsuitable for ceramic matrix composite components. Similarly, after use, a turbine engine component can be incurring wear or damage, and repairing the worn component remains difficult for the same reason.

Consequently, there remains a need to repair components containing ceramic matrix composite materials that exhibit defects, wear, and the like, during fabrication through after use.

### SUMMARY OF THE INVENTION

The present disclosure is directed, in a first aspect, to a process for restoring a ceramic containing material comprising the steps of: cleaning at least a portion of a location on a surface of a ceramic containing material to form a cleaned location, the ceramic containing material comprising at least one of the following: a coated preform, a partially densified ceramic matrix composite, a ceramic matrix composite component, and combinations thereof; masking the surface, except for the cleaned location, of the ceramic matrix composite with a maskant to form an aperture exposing the cleaned location; shaping the aperture to form a shaped, exposed cleaned location; depositing a material onto the shaped exposed location to form a location having a deposited material; densifying the deposited material to form a densified location; and reshaping the densified location to form a reshaped densified location.

In further embodiments of the present disclosure, including further embodiments of the above exemplary embodiments, at least the portion of the location comprises any one or more of the following: a defect, an error in machining, damage, an imperfection, an impact, a crack, a microcrack, a void, and combinations thereof.

In further embodiments of the present disclosure, including further embodiments of the above exemplary embodiments, cleaning comprises removing from the portion of the location any one or more of the following: a defect, an error in machining, damage, an imperfection, an impact, a crack, a microcrack, a void, and combinations thereof.

In further embodiments of the present disclosure, including further embodiments of the above exemplary embodiments, masking comprises using any one or more of the following techniques: spray, paint dip, slurry, felt wrap, fabric wrap, and combinations thereof.

In further embodiments of the present disclosure, including further embodiments of the above exemplary embodiments, the maskant comprises any one or more of the following: graphite, boron nitride, fibers, fabric, felt, powder, metallic foil, graphite foil, and combinations thereof.

In further embodiments of the present disclosure, including further embodiments of the above exemplary embodiments, depositing comprises any one or more of the following techniques: chemical vapor infiltration, chemical vapor deposition, and combinations thereof.

In further embodiments of the present disclosure, including further embodiments of the above exemplary embodiments, depositing the material comprises any one or more of the following materials: silicon carbide, boron carbide, zirconium-based composition, hafnium-based composition, rare earth-based composition, and combinations thereof; and, the material comprises any one or more of the following forms: fibers, fabric, felt, powder, and combinations thereof.

In further embodiments of the present disclosure, including further embodiments of the above exemplary embodiments, densifying comprises any one or more of the following techniques: chemical vapor infiltration, chemical vapor deposition, and combinations thereof.

In further embodiments of the present disclosure, including further embodiments of the above exemplary embodiments, reshaping comprises removing the maskant from the location, and at least a portion of the deposited material from the densified location proximate to the cleaned location.

In further embodiments of the present disclosure, including further embodiments of the above exemplary embodiments, the process further comprises, after shaping, the step of loading any one or more of the coated preform, the partially densified ceramic matrix composite, and the ceramic matrix composite component into a reactor chamber of a chemical vapor infiltration apparatus.

In further embodiments of the present disclosure, including further embodiments of the above exemplary embodiments, the process further comprises, after shaping, the step of utilizing a tool to optimally place any one or more of the coated preform, the partially densified ceramic matrix composite, and the ceramic matrix composite component in a reactor chamber of a chemical vapor infiltration apparatus.

In further embodiments of the present disclosure, including further embodiments of the above exemplary embodiments, the process further comprises, during depositing, the step of utilizing a tool to test any one or more of the coated preform, the partially densified ceramic matrix composite, and the ceramic matrix composite component in a reactor chamber of a chemical vapor infiltration apparatus.

In further embodiments of the present disclosure, including further embodiments of the above exemplary embodiments, further comprising the steps of: melt-infiltrating the ceramic containing material; and applying at least one coating material on the ceramic containing material.

In further embodiments of the present disclosure, including further embodiments of the above exemplary embodiments, melt-infiltrating comprises melt-infiltrating any one or more of the following molten infiltrants: metal, metalloid, metal alloy, metalloid alloy, glass, and combinations thereof.

In further embodiments of the present disclosure, including further embodiments of the above exemplary embodiments, the process further comprises, after depositing, removing the maskant from the surface.

In further embodiments of the present disclosure, including further embodiments of the above exemplary embodiments, In another embodiment, the present disclosure is directed to a process for remediating a ceramic containing material comprising the steps of: cleaning at least a portion of a location on a surface of at least one of the following: a coated preform, a partially densified ceramic matrix composite, and combinations thereof, to form a cleaned location; masking the surface, except for the cleaned location, with a maskant to form an aperture exposing the cleaned location; shaping the aperture to form a shaped, exposed cleaned location; loading any one or more of the coated preform, the partially densified ceramic matrix composite, and combinations thereof, into a reactor chamber of a chemical vapor infiltration apparatus; depositing a material onto the shaped exposed location to form a location having a deposited material; densifying the deposited material to form a ceramic matrix composite comprising a surface having a densified location; and reshaping the densified location to form a reshaped densified location.

In further embodiments of the present disclosure, including further embodiments of the above exemplary embodiments, at least the portion of the location comprises an error in machining; and, cleaning comprises removing from the portion of the location an error in machining.

In further embodiments of the present disclosure, including further embodiments of the above exemplary embodiments, further comprising the steps of: melt-infiltrating the ceramic containing material; and applying at least one coating material on the ceramic containing material, wherein melt-infiltrating comprises melt-infiltrating any one or more of the following molten infiltrants: metal, metalloid, metal alloy, metalloid alloy, glass, and combinations thereof.

In yet another embodiment, the present disclosure is directed to a process for repairing a ceramic matrix composite component comprising the steps of: cleaning at least a portion of a location on a surface or a bulk area of the ceramic matrix composite component to form a cleaned location; masking the surface, except for the cleaned location, of the ceramic matrix composite component with a maskant to form an aperture exposing the cleaned location; shaping the aperture to form a shaped, exposed cleaned location; loading the ceramic matrix composite component into a reactor chamber of a chemical vapor infiltration apparatus; depositing a material onto the shaped exposed location to form a location having a deposited material; densifying the deposited material to form a densified location on the ceramic matrix composite component; and reshaping the densified location to form a reshaped densified location on the ceramic matrix composite.

In further embodiments of the present disclosure, including further embodiments of the above exemplary embodiments, at least the portion of the location comprises any one or more of the following: a defect, an error in machining, damage, an imperfection, an impact, a crack, a microcrack, a void, and combinations thereof; and, cleaning comprises removing from the portion of the location any one or more of the following: a defect, an error in machining, damage, an imperfection, an impact, a crack, a microcrack, a void, and combinations thereof.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a flowchart illustrating an exemplary process for depositing material onto a ceramic matrix composite.
FIG. 2 is, not drawn to scale, a ceramic matrix composite having a location exhibiting an imperfection.
FIG. 3 is, not drawn to scale, a ceramic matrix composite of FIG. 2 having a cleaned location.
FIG. 4 is, not drawn to scale, a ceramic matrix composite of FIG. 3 having a masked location and an aperture exposing the cleaned surface area.
FIG. 5 is, not drawn to scale, a ceramic matrix composite of FIG. 4 having a material deposited on the exposed cleaned location.
FIG. 6 is an illustration of a CVI assembly for use in performing the exemplary process disclosed herein.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

As used herein, a "coated preform" or "coated substrate" refers to an interface coated ceramic fiber preform or an interface coated ceramic fiber substrate. As also used herein, a "partially densified CMC" or "partially densified ceramic matrix composite" refers to a coated substrate or preform that includes a structural support material layer that facilitates rigidization of the preform to become self-supporting, also known as a rigidized coated substrate or rigidized coated preform. As also used further herein, a "ceramic matrix composite" or "CMC" refers to a matrix infiltrated into the coated substrate or coated preform or alternatively, a matrix infiltrated into the rigidized partially densified CMC.

The present disclosure is directed to a process for depositing material onto a ceramic matrix composite during its fabrication or after its initial use during repair. The flexibility of implementation may be due to applying a maskant and masking the ceramic matrix composite. When a defect, error in machining or any other imperfection may be discovered during fabrication, the respective ceramic matrix composite may be isolated and repaired without interrupting or disrupting the entire overall production process. In contrast, when any wear, whether minor or not appears, the respective ceramic matrix composite may be repaired and placed back into service thus prolonging the service life of the respective component, e.g., gas turbine engine component.

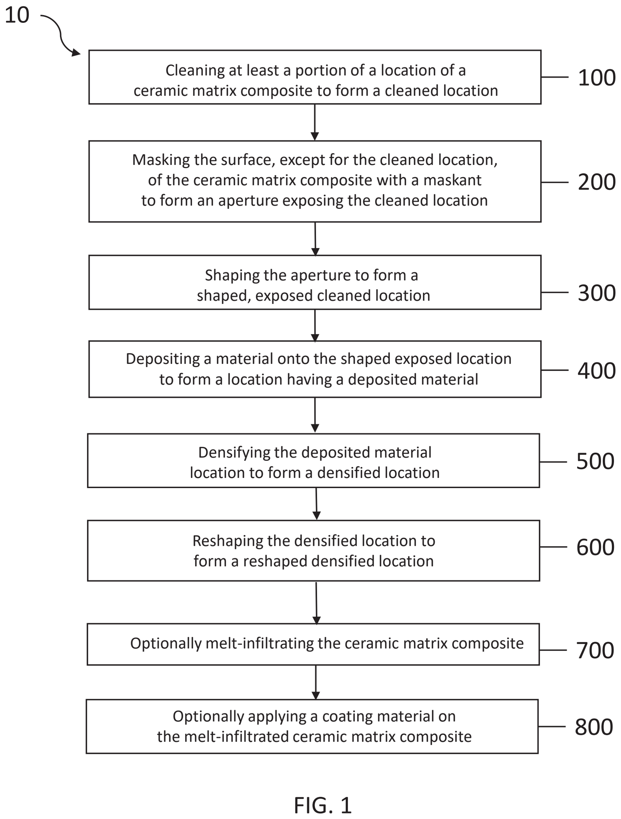

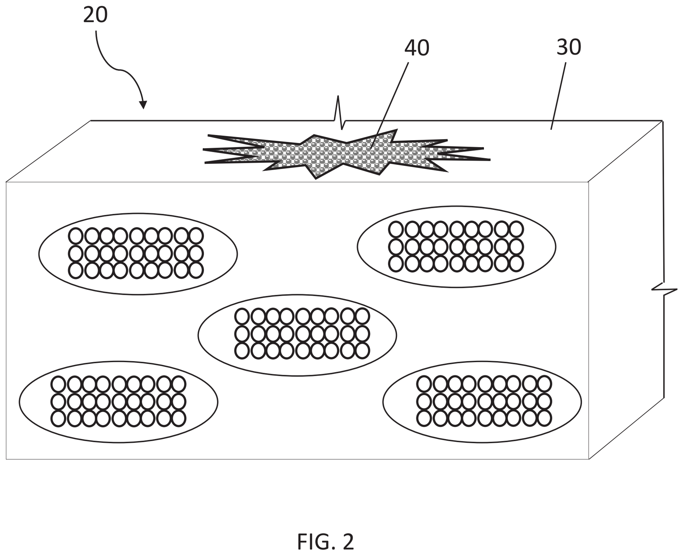

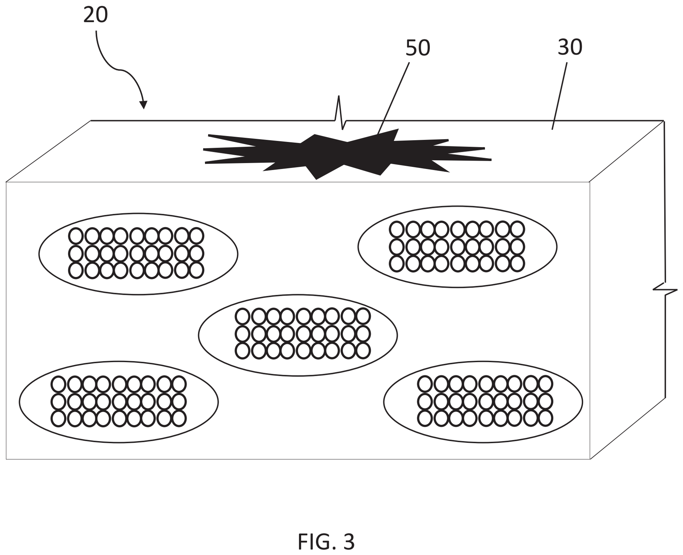

Referring now to FIG. 1, a flowchart 10 illustrating an exemplary process for depositing material onto a ceramic matrix composite is shown. For example, the ceramic matrix composite 20 may have a location 30 exhibiting wear or damage 40 (see FIG. 2). At an exemplary step 100 of FIG. 1, at least a portion of a location, e.g., a surface area or both the surface area and underlying bulk, of a ceramic matrix composite may be cleaned to form a cleaned location 50 (see FIG. 3). As shown in FIG. 2, the location being cleaned may exhibit and possess a defect, error in machining, any other imperfection or wear, whether minor or not as mentioned above. Any cleaning method that can remove the damaged ceramic matrix composite, and any additional material present, e.g., a coating such as an environmental barrier coating, from the surface without detrimentally impacting the underlying structural integrity of the ceramic matrix composite or component, may be utilized. Suitable cleaning method may include, but are not limited to, grinding, machining, etching; individually, and combinations thereof, and the like. For example, a suitable machining technique may include, but is not limited to, water jet laser.

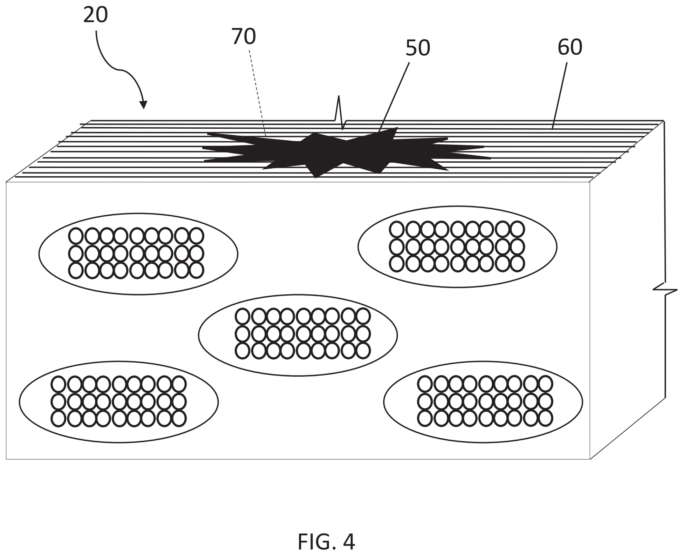

Next, at an exemplary step 200 of FIG. 1, the surface of the ceramic matrix composite, except for the cleaned location 30 to be repaired, may be masked with a maskant 60 (see FIG. 4). Any masking technique that may apply a maskant on a surface of the ceramic matrix composite may be utilized. Suitable masking techniques may include, but are not limited to, spray, paint dip, slurry, felt wrap, fabric wrap; individually, and combinations thereof, and the like. Any maskants that may adhere to a surface of the ceramic matrix composite or damaged ceramic matrix composite, and to any additional material present, e.g., a coating such as an environmental barrier coating, may be utilized. Suitable maskants may include, but are not limited to, graphite, boron nitride; individually, and combinations thereof, and the like. In at least one embodiment, a boron nitride powder or wrap using felt or fabric may be applied to the entire surface of the ceramic matrix composite. In at least one other embodiment, a slurry containing the maskant may be sprayed onto the surface, except for the cleaned portion, of the ceramic matrix composite. In yet at least one other additional embodiment, the maskant may include, but is not limited to, fabric such as carbon fiber; metallic foil such as molybdenum foil; a graphite foil, e.g., graphoil; individually, and combinations thereof, and the like. The maskant may be applied to the entire surface of the ceramic matrix composite. For example, the maskant may be form fitting, that is, fit snuggly, yet not bonded to the surface. In particular, the maskant may deform to the surface. Suitable fitting techniques may include, but are not limited to, applying a vacuum or pressure; evacuating a chamber; individually, and combinations thereof, and the like. Once completed, the resultant selectively masked ceramic matrix composite may have an aperture 70 exposing the cleaned portion of the surface.

Next, at an exemplary step 300 of FIG. 1, the aperture 70 exposing the cleaned location may be shaped. The desired size of the aperture 70 may reflect any one or more of the aforementioned defect(s), e.g., error(s) in machining; damage(s), e.g., crack(s) and/or void(s); and usage(s), e.g., wear and/or impact(s); and may be minor or not in nature. The amount of maskant removed may reflect an excess amount applied and may encompass at least a portion of the cleaned location. Any method that can remove the maskant, and any additional material present, e.g., a coating such as an environmental barrier coating, without detrimentally impacting the underlying structural integrity of the ceramic matrix composite or component, yet also shape the aperture 70 to its desired size, may be utilized. Suitable removal methods may include, but are not limited to, grinding, machining; individually, and combinations thereof, and the like.

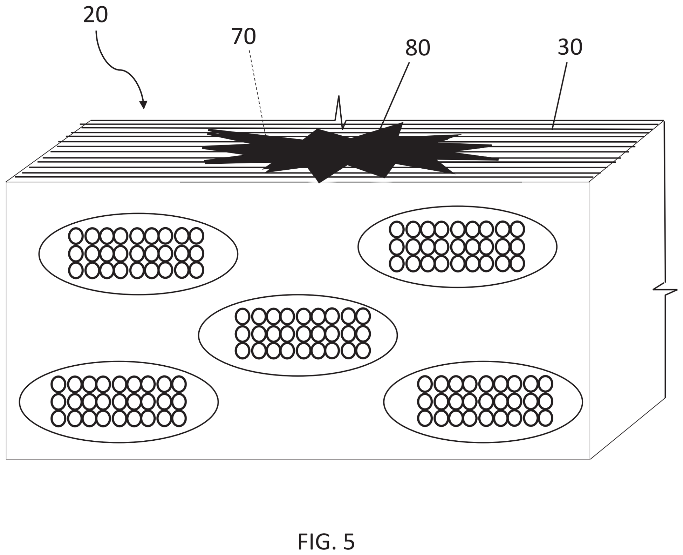

Next, at an exemplary step 400 of FIG. 1, a material may be deposited onto the shaped exposed cleaned location to, e.g., fill or coat, location 30 having a deposited material 80 (see FIG. 5). Suitable deposition techniques may include, but are not limited to, chemical vapor infiltration, chemical vapor deposition, spray, paint dip, slurry; individually, and combinations thereof, and the like. Suitable materials may include, but are not limited to, silicon carbide, boron carbide, zirconium-based composition, hafnium-based composition, rare earth-based composition, fibers, fabric, felt, powder; individually, and combinations thereof, and the like. Suitable fiber, fabric and/or felt material(s) may include, but are not limited to, silicon carbide; individually, and combinations thereof, and the like. In at least one embodiment, material(s), such as silicon carbide, boron carbide, zirconium-based composition, hafnium-based composition and/or rare earth-based composition, may be deposited via chemical vapor infiltration or chemical vapor deposition. In at least one other embodiment, material(s), such as fibers, fabric, felt in combination of a powder, that may be contained in a slurry and deposited via spraying, paint dipping or slurrying. In yet at least one other embodiment, material(s), such as fibers, fabric and/or felt, may be deposited as a patch as well as, e.g., having been sprayed, paint dipped and/or slurried as already discussed. When initially deposited, the aforementioned materials may form a structure, for example, a scaffolding structure(s) for the subsequent steps. Such scaffolding structure(s) may cover an exposed cleaned location, e.g., surface area, or, for a bulk area, may act as temporary structure until being densified and filled further via the aforementioned deposition techniques. The exemplary process disclosed herein not only improves targeted deposition and/or repair, but also facilitates targeted structural reinforcement by introducing fiber(s) at the specific location exhibiting defect, damage and/or usage.

Next, at an exemplary step 500 of FIG. 1, the repaired location 30 having the deposited material may be densified to form a densified location. Suitable densification techniques may include, but are not limited to, chemical vapor infiltration, chemical vapor deposition; individually, and combinations thereof, and the like. When carrying out the densification technique, various methods for enhancing the technique optionally may be utilized. In at least one embodiment, tools, such as computational fluid dynamics; individually, and combinations thereof, and the like; may be utilized to determine the following: (i) identify the type of ceramic matrix composite or component; (ii) determine the orientation of the ceramic matrix composite or component in a CVI/CVD furnace; (ii) determine the speed of the CVI/CVD deposition rate; (iv) determine the location of the deposited material portion on the ceramic matrix composite or component; and, (v) type of the deposited material portion on the ceramic matrix composite or component. In at least one embodiment, the depth of the deposited material may influence the speed of the CVI/CVD deposition rate. For example, a shallow depth may permit an accelerated CVI/CVD deposition rate. In contrast, if the ceramic matrix composite or component is being repaired, the repair process may permit a slower, gradual CVI/CVD deposition rate. When considering the aforementioned factors, which do not represent an exhaustive list and does not exclude additional factors, the resultant deposition process may be enhanced such that the process is more efficient and cost effective. In addition, as each potential factor is considered prior to carrying out the deposition technique, additional tools such as finite elemental analysis may be utilized in combination to further improve and enhance the resultant ceramic matrix composite or component. For example, a tool, such as finite element analysis; individually, and combinations thereof, and the like; may validate and test designs; predict how the densified ceramic matrix composite or component may react to forces like vibration, heat, fluid flow, and the like; and, may even determine if the densified ceramic matrix composite or component may fail, wear out or work as intended. By utilizing both, e.g., computational fluid dynamics and finite element analysis, the ceramic matrix composite or component may be repaired during fabrication without disrupting overall production run and/or after usage and returned to the field to fulfill its intended service life.

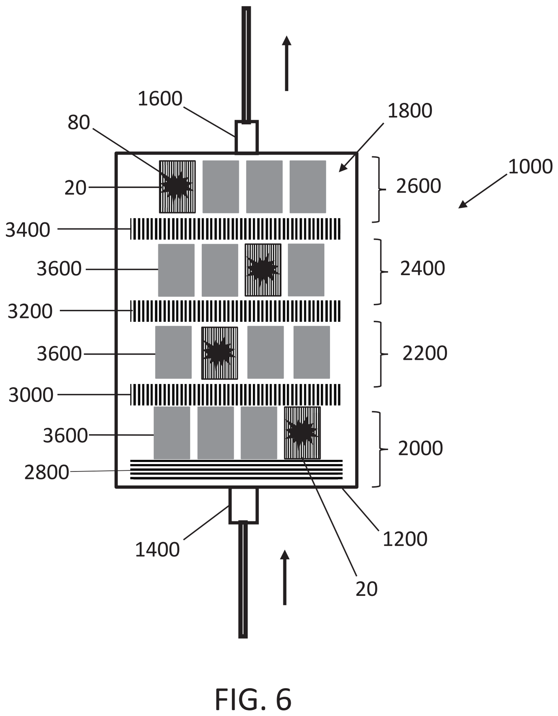

Referring now to FIG. 6, a chemical vapor infiltration (CVI) assembly 1000 for the manufacture of CMC components is shown. The CVI assembly 1000 may be designed to fabricate a coated preform or densify a coated preform to form a partially densified ceramic matrix composite. In at least one embodiment, the CVI assembly 1000 may include a reactor 1200, having a gas inlet 1400, a gas outlet 1600, and a reactor chamber 1800. The mixing chamber 2000 may include one or more preheaters 2800 to heat the reactant gas entering the reactor 1200 at gas inlet 1400 (see arrow). In at least one embodiment, the reactor chamber 1800 may be subdivided into one or more levels or sub-chambers 2000, 2200, 2400, 2600, defined between gas distributor plates 3000, 3200, 3400. In at least one embodiment, one or more coated preforms 3600 or partially densified ceramic matrix composites 3600 may be disposed between the preheater 2800 and gas distributor plate 3000; between the respective gas distributor plates 3000, 3200, 3400; and, between the gas distributor plate 3400 and outlet 1600. The CVI assembly 1000 also may include a controller (not shown), which may be communicatively coupled to the assembly 1000, and other components, to operate the same. Once the CVI reaction is completed, the remaining gaseous reactants, products and by-products may exit the reactor chamber 1800 through the gas outlet 1600 (see arrow).

In at least one embodiment, the reactor 1200 may be, e.g., an isobaric reactor, configured to house one or more coated preforms 3600 and/or partially densified ceramic matrix composites 3600 for remediation, and/or CMC components 20 having deposited material 80 for repair. The reactor 1200 also facilitates the chemical vapor infiltration of at least one reactant gas into and within the coated preforms 3600, partially densified ceramic matrix composites 3600, and/or CMC components 20. The gas distributor plates 3000, 3200, 3400 may provide support, e.g., shelves, for multiple coated preforms 3600, partially densified ceramic matrix composites 3600, and/or CMC components 20 and facilitate reactant gas redistribution among chambers 2200, 2400, 2600. For example, the gas distributor plates 3000, 3200, 3400 may be perforated or otherwise porous members that allow for diffusion or flow of reactant gas between chambers 2200, 2400, 2600. In at least one embodiment, the number of chambers as well as the height of each chamber may be increased or decreased depending on the application, number, and size of the coated preforms 3600, partially densified ceramic matrix composites 3600, and/or CMC components 20.

In at least one embodiment, utilizing tools, such as computational fluid dynamics and finite element analysis as discussed above, may facilitate a simultaneous repair run and production run within the CVI assembly 1000. For example, each coated preform 3600 and/or partially densified ceramic matrix composite 3600 may be identified as being in remediation according to its location within the reactor chamber 1800. Any combination of coated preforms 3600 and/or partially densified ceramic matrix composites 3600, and/or CMC component 20 may be loaded therein. In addition, whether being remediated or repaired, the aforementioned tools may tailor specific reaction conditions and/or operating parameters as discussed above for each individual coated preform 3600, partially densified ceramic matrix composite 3600, and/or CMC component 20. For instance, when a tool such as utilizing computational fluid dynamics, one or more coated preforms 3600 and/or partially densified ceramic matrix composites 3600 may be remediated, while one or more CMC components 20 may be repaired within the same reactor chamber 1800 at the same time. Furthermore, when utilizing a tool such as finite element analysis, the design of each respective coated preform 3600, partially densified ceramic matrix composite 3600, and/or CMC component 20 may be tested and validated to ensure quality and reliability.

Next, at an exemplary step 600 of FIG. 1, the densified location may be reshaped to form a reshaped densified location. Reshaping the densified location may reflect the amount deposited was excessive and extended beyond the intended desired size. Reshaping may also remove the remaining maskant on the surface of the ceramic matrix composite or component. The excess amount may encompass at least a portion of the surface located beyond and proximate to the densified surface location. Any method that can remove the excess material without detrimentally impacting the underlying structural integrity of the ceramic matrix composite or component, yet also reshape the densified location to its desired size, may be utilized. Suitable removal methods may include, but are not limited to, grinding, machining; individually, and combinations thereof, and the like.

Next, at an optional exemplary step 700 of FIG. 1, the ceramic matrix composite or component having the densified location may be melt-infiltrated. The chosen molten infiltrant for use herein reflects the matrix material contained within the ceramic matrix composite or component. For example, if the matrix material contains an oxide phase, then the molten infiltrant may be a glass or a glass-containing material. Suitable molten infiltrants may include, but are not limited to, metal, metalloid, metal alloy, metalloid alloy, glass; individually, and combinations thereof, and the like.

Lastly, at an optional exemplary step 800 of FIG. 1, the melt-infiltrated ceramic matrix composite or component may have a coating deposited thereupon. In at least one embodiment, a coating, such as an environmental barrier coating, may be applied to the surface of the melt-infiltrated ceramic matrix composite or component. Alternative or additional coating(s) may be applied too depending on the location of the repair relative to the component geometry, the desired use, and the service life of the melt-infiltrated ceramic matrix composite or component.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A process for restoring a ceramic containing material comprising the steps of:
cleaning at least a portion of a location (30) on a surface of a ceramic containing material to form a cleaned location (50), the ceramic containing material comprising at least one of the following: a coated preform, a partially densified ceramic matrix composite, a ceramic matrix composite component, and combinations thereof;
masking the surface, except for the cleaned location, of the ceramic matrix composite with a maskant (60) to form an aperture (70) exposing the cleaned location;
shaping the aperture to form a shaped, exposed cleaned location;
depositing a material onto the shaped exposed location to form a location having a deposited material (80);
densifying the deposited material to form a densified location; and
reshaping the densified location to form a reshaped densified location.

2. The process of claim 1, wherein at least the portion of the location comprises any one or more of the following: a defect, an error in machining, damage, an imperfection, an impact, a crack, a microcrack, a void, and combinations thereof.

3. The process of claim 1 or 2, wherein cleaning comprises removing from the portion of the location any one or more of the following: a defect, an error in machining, damage, an imperfection, an impact, a crack, a microcrack, a void, and combinations thereof.

4. The process of claim 1, 2 or 3, wherein masking comprises using any one or more of the following techniques: spray, paint dip, slurry, felt wrap, fabric wrap, and combinations thereof.

5. The process of any preceding claim, wherein the maskant comprises any one or more of the following: graphite, boron nitride, fibers, fabric, felt, powder, metallic foil, graphite foil, and combinations thereof.

6. The process of any preceding claim, wherein depositing comprises any one or more of the following techniques: chemical vapor infiltration, chemical vapor deposition, and combinations thereof.

7. The process of any preceding claim, wherein depositing the material comprises any one or more of the following materials: silicon carbide, boron carbide, zirconium-based composition, hafnium-based composition, rare earth-based composition, and combinations thereof; and, the material comprises any one or more of the following forms: fibers, fabric, felt, powder, and combinations thereof.

8. The process of any preceding claim, wherein densifying comprises any one or more of the following techniques: chemical vapor infiltration, chemical vapor deposition, and combinations thereof.

9. The process of any preceding claim, wherein reshaping comprises removing the maskant from the location, and at least a portion of the deposited material from the densified location proximate to the cleaned location.

10. The process of any preceding claim, further comprising:
after shaping, the step of loading any one or more of the coated preform, the partially densified ceramic matrix composite, and the ceramic matrix composite component into a reactor chamber (1800) of a chemical vapor infiltration apparatus (1000); and/or
after shaping, the step of utilizing a tool to optimally place any one or more of the coated preform, the partially densified ceramic matrix composite, and the ceramic matrix composite component in a reactor chamber (1800) of a chemical vapor infiltration apparatus (1000).

11. The process of any preceding claim, further comprising, during depositing, the step of utilizing a tool to test any one or more of the coated preform, the partially densified ceramic matrix composite, and the ceramic matrix composite component in a reactor chamber (1800) of a chemical vapor infiltration apparatus (1000).

12. The process of any preceding claim, further comprising the steps of:
melt-infiltrating the ceramic containing material; and
applying at least one coating material on the ceramic containing material,
wherein, optionally, melt-infiltrating comprises melt-infiltrating any one or more of the following molten infiltrants: metal, metalloid, metal alloy, metalloid alloy, glass, and combinations thereof.

13. The process of any preceding claim, further comprising, after depositing, removing the maskant from the surface.

14. A process for remediating a ceramic containing material comprising the steps of:
cleaning at least a portion of a location (30) on a surface of at least one of the following: a coated preform, a partially densified ceramic matrix composite, and combinations thereof, to form a cleaned location (50);
masking the surface, except for the cleaned location, with a maskant (60) to form an aperture (70) exposing the cleaned location;
shaping the aperture to form a shaped, exposed cleaned location;
loading any one or more of the coated preform, the partially densified ceramic matrix composite, and combinations thereof, into a reactor chamber (1800) of a chemical vapor infiltration apparatus (1000);
depositing a material onto the shaped exposed location to form a location having a deposited material (80);
densifying the deposited material to form a ceramic matrix composite (20) comprising a surface having a densified location; and
reshaping the densified location to form a reshaped densified location,
wherein, optionally:
at least the portion of the location comprises an error in machining; and, cleaning comprises removing from the portion of the location an error in machining; and/or
the process further comprises the steps of:
melt-infiltrating the ceramic containing material; and
applying at least one coating material on the ceramic containing material,
wherein melt-infiltrating comprises melt-infiltrating any one or more of the following molten infiltrants: metal, metalloid, metal alloy, metalloid alloy, glass, and combinations thereof.

15. A process for repairing a ceramic matrix composite component comprising the steps of:
cleaning at least a portion of a location (30) on a surface or a bulk area of the ceramic matrix composite component to form a cleaned location (50);
masking the surface, except for the cleaned location, of the ceramic matrix composite component with a maskant (60) to form an aperture (70) exposing the cleaned location;
shaping the aperture to form a shaped, exposed cleaned location;
loading the ceramic matrix composite component into a reactor chamber (1800) of a chemical vapor infiltration apparatus (1000);
depositing a material onto the shaped exposed location to form a location having a deposited material (80);
densifying the deposited material to form a densified location on the ceramic matrix composite component; and
reshaping the densified location to form a reshaped densified location on the ceramic matrix composite,
wherein, optionally, at least the portion of the location comprises any one or more of the following: a defect, an error in machining, damage, an imperfection, an impact, a crack, a microcrack, a void, and combinations thereof; and, cleaning comprises removing from the portion of the location any one or more of the following: a defect, an error in machining, damage, an imperfection, an impact, a crack, a microcrack, a void, and combinations thereof.
